# EUROPEAN PATENT SPECIFICATION

(11) **EP 1 052 372 B1**
(45) Date of publication and mention of the grant of the patent: **03.08.2005**
(21) Application number: 00304028.4
(22) Date of filing: 12.05.2000
(51) Int. Cl.: F01D 5/18, F01D 9/04, F01D 25/12

(54) **Trailing edge cooling passages for gas turbine nozzles with turbulators**
Kühlkanäle mit Tublenzerzeugern für die Austrittskanten von Gasturbinenleitschaufeln
Canaux de refroidissement avec des dispositifs turbulateurs pour les arêtes arrières des aubes de guidage des turbines à gaz

(30) Priority: 14.05.1999 US 312427
(43) Date of publication of application: 15.11.2000
(73) Proprietor: GENERAL ELECTRIC COMPANY, Schenectady, NY 12345 (US)
(72) Inventor: Thatcher, Jonathan Carl, Scotia, New York 12302 (US); Burdgick, Steven Sebastian, Schenectady, New York 12303 (US)
(74) Representative: Pedder, James Cuthbert

(56) References cited:
- EP-A- 1 098 068
- US-A- 4 601 638
- US-A- 5 243 759
- US-A- 5 288 207
- US-A- 5 752 801
- PATENT ABSTRACTS OF JAPAN vol. 011, no. 347 (M-641), 13 November 1987 (1987-11-13) & JP 62 126208 A (HITACHI LTD), 8 June 1987 (1987-06-08)

## Description

The present invention relates to gas turbine nozzles having cooling passages for flowing a thermal medium from a cavity within the nozzle vane through the passages into the hot gas path for cooling the trailing edge and particularly relates to trailing edge cooling passages having turbulators and cooling passage inlets arranged to enhance temperature distribution, minimize thermal stresses and trailing edge cracks and reduce the magnitude of required bleed air.

Trailing edges of nozzle vanes in gas turbines often contain cooling passages for cooling the trailing edges. Typically, cooling air is provided in a cavity in the vane and passes through a plurality of passages spaced from one another along the length of the trailing edge of the vane and exits into the hot gas path. The cooling air cools the metal of the trailing edge surrounding the passages and along outer surfaces of the trailing edge. Conventionally, thermal barrier coatings are provided along the side walls of the trailing edge and about the trailing edge tip. However, notwithstanding efforts to uniformly apply the thermal barrier coating to the side walls and tip of the trailing edge, the coating oftentimes breaks off from the tip during handling or spalls off the tip during operation. Thus, cooling the tip of the trailing edge is of particular concern and therefore requires heat transfer enhancement for effective cooling.

Turbulators have also been employed in the passages for cooling the trailing edges of nozzles. The turbulators interrupt the cooling air flow, creating turbulence and cause enhanced cooling effect. Turbulators are conventionally located along the entire length of the cooling passages. This therefore results in enhanced cooling of the surrounding metal and trailing edge surfaces throughout the length of the trailing edge passages. The material of these regions, however, are protected, to a large extent, by the thermal barrier coating along the sides of the trailing edge. Consequently, the region requiring cooling enhancement, i.e., the tip of the trailing edge, is effectively cooled, while those regions which are protected by the thermal barrier coating and do not require cooling enhancement are nonetheless provided with enhanced cooling effects by the turbulators. This causes a wide-ranging temperature distribution laterally along the trailing edge, with consequent thermal mismatches resulting in high stresses in the metal of the trailing edge.

Further, it will be appreciated that air for cooling the trailing edge of nozzle vanes typically comprises compressor discharge air. To the extent air is bled from the compressor for cooling purposes, the turbine has diminished efficiency. Accordingly, the problem at hand is to provide enhanced cooling effect in the regions requiring enhanced cooling, while eliminating enhanced cooling for those regions of the trailing edge which do not require enhanced cooling, while simultaneously limiting required cooling bleed air from the compressor discharge.

Document US 5 752 801 shows a cooling apparatus for a turbine according to the prior art.

In accordance with the present invention, there is provided a gas turbine nozzle vane having trailing edge cooling passages for receiving a thermal medium, preferably air, for cooling the trailing edge and which vane employs partially-turbulated trailing edge cooling passages. By providing cooling air passages only partially turbulated, a temperature distribution across the trailing edge is achieved with minimized thermal gradients and consequent reduced stresses, while affording enhanced cooling along the tip of the trailing edge with minimal compressor bleed discharge air. To accomplish the foregoing, a nozzle vane trailing edge is provided having a plurality of cooling passages spaced one from the other along the length of the trailing edge and lying in communication with a cavity within the vane. Cooling air flows from the cavity through the cooling passages into the hot gas stream. The passages, however, are only partially turbulated and then only in regions where enhanced heat transfer is required. Thus, the aft portions of the trailing edge passages adjacent the tip, i.e., adjacent the outlet of the cooling air flowing into the hot gas stream, are turbulated, while the majority of the passages forwardly of the turbulated passage portions are not turbulated. Preferably, those forward passage portions have smooth bores. Consequently, the temperature distribution in the metal regions surrounding the non-turbulated passage portions minimizes the thermal gradients and reduces stresses, while the turbulated aft passage portions afford enhanced cooling effects in the region along the trailing edge tip where the thermal barrier coating has worn or spalled off during operation.

Further, bleed compressor discharge air is minimized for flow through the cooling passages by limiting the size of the entry slots into the passages. Thus, each entry slot adjacent the forward end of the passages has a reduced cross-section, limiting the air flow into the passage. In this manner, reduced compressor bleed discharge air is required thereby affording improved turbine efficiency.

In a preferred embodiment according to the present invention, there is provided cooling apparatus for a turbine comprising a turbine vane having a trailing edge terminating in an aft tip and a cavity forward of the trailing edge for receiving a thermal medium, the trailing edge including a plurality of discrete passages spaced one from another along the length of the trailing edge, the passages lying in communication at one end with the cavity for receiving the thermal medium from the cavity for flow therethrough to apertures along the tip of the trailing edge and turbulators disposed in the passages along aft portions thereof with portions of the passages forwardly of the aft portions and forming the majority of the lengths of the passages being without turbulators, each turbulator forming an abutment surface in the aft passage portion for creating turbulence in the thermal medium passing through the aft passage portions thereby cooling the trailing edge and minimizing thermal gradients and stresses therealong.

The invention will now be described in greater detail, by way of example, with reference to the drawings, in which:
FIGURE 1 is a fragmentary elevational view of a hot gas path of a turbine illustrating nozzle vanes and rotor buckets situate in the turbine, the rotor vane being illustrated with a trailing edge having cooling passages according to the present invention;
FIGURE 2 is an enlarged cross-sectional view through the trailing edge of a prior art nozzle vane illustrating a turbulated flow passage;
FIGURE 3 is a perspective view of a portion of the prior art turbulated flow passage; and
FIGURE 4 is a cross-sectional view similar to Figure 2 illustrating a partially turbulated trailing edge cooling passage for gas turbine nozzles according to the present invention.

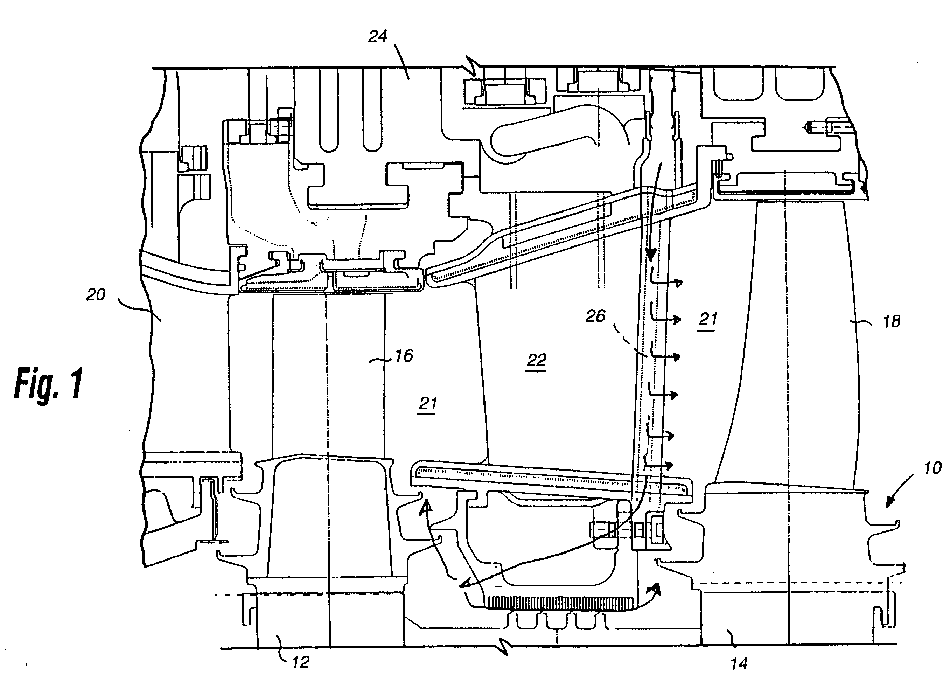

Referring to the drawings, particularly to Figure 1, there is illustrated a portion of a rotor, generally designated 10, and particularly first and second wheels 12 and 14, respectively, of the rotor. Each of the wheels 12 and 14 carries a circumferential array of buckets 16 and 18, respectively. Circumferential arrays of first and second-stage nozzle vanes 20 and 22 are also illustrated. It will be appreciated that the buckets 16 and 18 and nozzle vanes 20 and 22 lie in the hot gas path 21 of the turbine. In the turbine illustrated in Figure 1, the nozzle vane 22 is carried by an inner shell 24, the details of which form no part of the present invention. Suffice to say that nozzle vanes 22 lie in the hot gas path and the trailing edges of the nozzle vanes are air-cooled by flowing cooling air, typically from the compressor discharge, into a trailing edge cavity 26 for flow through passages through the trailing edge tip into the hot gas stream.

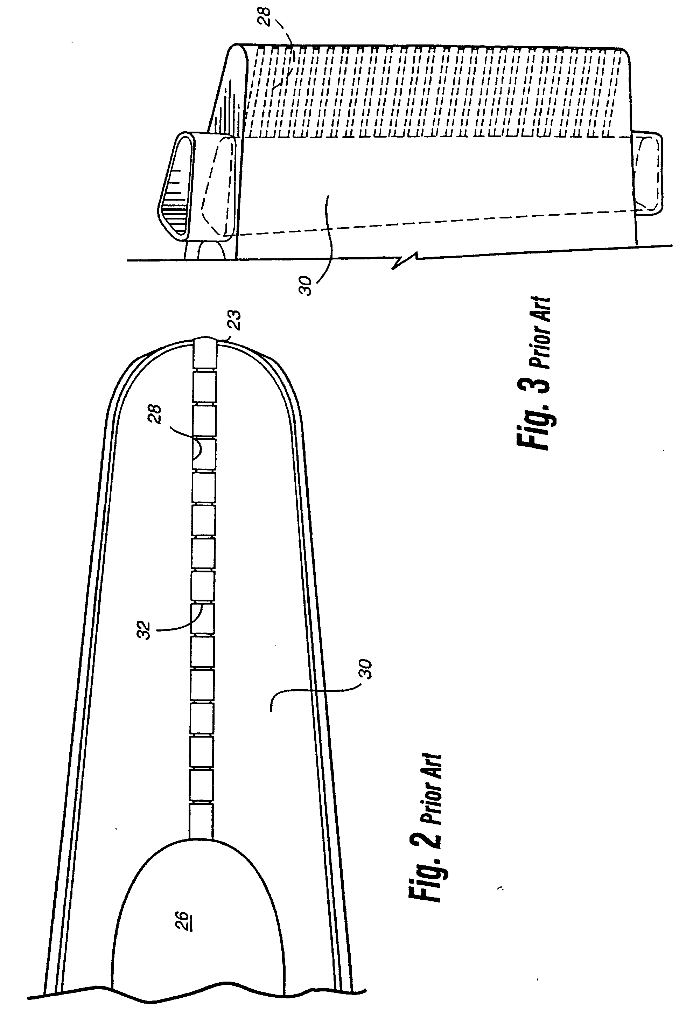

Referring to Figures 2 and 3, and as noted above, air-cooling of the trailing edges of nozzle vanes has been accomplished in the past. Typically, air is supplied into an aft cavity of each vane, for example, cavity 26, and a plurality of passages 28 spaced one from the other along the length of the vane are formed through the trailing edge 30 for flowing cooling air from the cavity 26 through passage openings spaced along the tip 23 of the trailing edge into the hot gas path. The passages 28 are typically provided with turbulators 32 spaced one from the other uniformly along the entire length of each passage 28. The turbulators 32 may take various forms and, in the illustrated prior art, take the form of a circumferentially extending ribs spaced axially and uniformly one from the other along the length of each passage 28. The turbulators provide turbulence to the flow of air and afford an increased cooling effect prior to exiting the trailing edge through the tip 23.

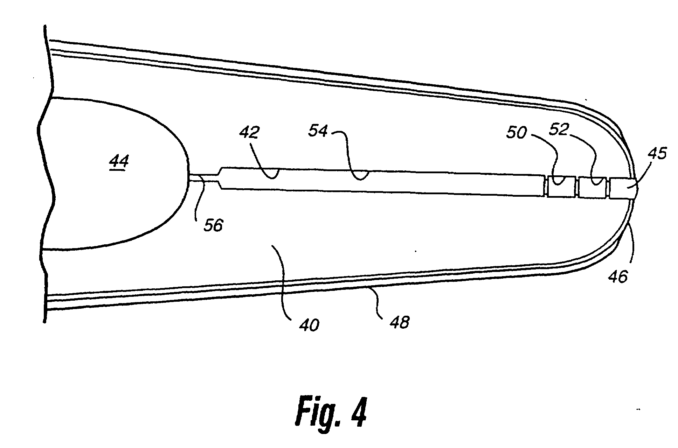

In the present invention illustrated in Figure 4, the trailing edge 40 of a nozzle vane, for example, the vane 22 of Figure 1, has a plurality of passages 42 spaced one from the other along the length of the trailing edge. Each passage lies in communication with a cavity 44 supplied with cooling air, preferably compressor discharge air. The opposite ends of the passages 42 open through apertures 45 through the tip 46 of the trailing edge 40 for flowing the spent cooling air directly into the hot gas path. Also illustrated in Figure 4 is a thermal barrier coating (TBC) 48 formed along the side faces of the trailing edge 40. The TBC coating is typically applied along the tip of the trailing edge but sometimes through handling or in actual operation, comes off or spalls off from the tip 46, leaving the tip region of the trailing edge 40 unprotected by the TBC. Consequently, it is important that the tip region of the trailing edge receives enhanced cooling. It is also important that the temperature distributions laterally across the trailing edge have reduced thermal gradients to minimize thermally induced stresses. To minimize the temperature gradients yet provide enhanced cooling at the tip region of the trailing edge, each of the cooling passages 42 is partially turbulated with the turbulators being located adjacent an aft portion 50 of the passage 42. As illustrated in Figure 4, the turbulators comprise circumferentially extending ribs 52 which form abutment surfaces affording turbulence to the air passing through the aft passage portions 50, thereby providing enhanced cooling effects in the tip region of the trailing edge. It will be appreciated that the turbulators 52 may take other forms, such as pins, bars, roughened surfaces or the like. Preferably also, the passages 42 are circular in cross-sectional configuration. Cooling passages circular in cross-section, in contrast to other cross-sectional shapes such as oval, have been demonstrated to also provide enhanced cooling effects.

As illustrated in Figure 4, the majority of the length of each passage 42 is non-turbulated, i.e., the major portion 54 of the passage 42 is preferably smooth bore. The TBC coating 48 as illustrated extends along the side faces of the trailing edge vane. Consequently, the temperature distribution or gradient laterally along the trailing edge is minimal whereby insubstantial thermal stresses are minimized.

It is also significant that by reducing the magnitude of the trailing edge regions requiring enhanced cooling effect, a reduction in the thermal medium, i.e., the compressor discharge bleed air for cooling purposes, can be effected. Thus, to limit the cooling air flow, each of the passages 42 has a forward end 56 which forms a flow restriction between the larger diameter forward smooth bore portion of the passage 42 and the cavity 44. A limited magnitude of cooling air thus enters the cooling passages from the cavity 44 thereby reducing the required magnitude of bleed air from the compressor. The restriction 56 may take any number of forms and, in the illustrated instance, comprises a smaller smooth bore opening affording the reduced cross-section of the inlets to the passages 42.

## Claims

1. Cooling apparatus for a turbine comprising:
a turbine vane (22) having a trailing edge (40) terminating in an aft tip (46) and a cavity (44) forward of said trailing edge (40) for receiving a thermal medium;
said trailing edge (40) including a plurality of discrete passages (42) spaced one from another along the length of the trailing edge (40), said passages (42) lying in communication at one end with and directly opening into said cavity (44) for receiving the thermal medium from said cavity (44) for flow therethrough to apertures (45) along said tip (46) of said trailing edge (40); **characterised by**
turbulators (52) disposed in said passages (42) along aft portions (50) thereof with portions (54) of said passages (42) forwardly of said aft portions (50) and forming the majority of the lengths of said passages (42) being without turbulators (52), each turbulator (52) forming an abutment surface in said aft passage portion (50) for creating turbulence in said thermal medium passing through said aft passage portions (50) thereby cooling the trailing edge (40) and minimizing thermal gradients and stresses therealong.

2. Apparatus according to claim 1 wherein said forward passage portions (54) have smooth bores.

3. Apparatus according to claim 1 or 2 wherein said passages (42) have circular cross-sections.

4. Apparatus according to claim 1, 2 or 3 wherein said turbulators (52) comprise a plurality of ribs projecting radially inwardly into said passages (42).

5. Apparatus according to any preceding claim wherein said forward portions (54) of said passages (42) have reduced flow inlet apertures (56) adjacent junctions of said cavity (44) and said passages (42) for limiting the flow of thermal medium into said passages (42).

6. Apparatus according to claim 1 wherein said turbulators are disposed solely along aft portions (50) of said passages (42).

7. Apparatus according to claim 6 wherein said forward passage portions (54) have smooth bores throughout their lengths.

## Patentansprüche

1. Kühlvorrichtung fiir eine Turbine mit:
einer Turbinenschaufel (22) mit einer Hinterkante (40), die in einer hinteren Spitze (46) und einem Hohlraum (44) vor der Hinterkante (40) zum Aufnehmen eines thermischen Mediums endet;
wobei die Hinterkante (40) eine Mehrzahl von diskreten Durchgängen (42) umfasst, die voneinander entlang der Länge der Hinterkante (40) beabstandet sind,
wobei die Durchgänge (42) in Kommunikation an einem Ende mit dem Hohlraum (44) liegen und sich direkt in diesem öffnen, um das thermische Medium von dem Hohlraum (44) zur Strömung dahin durch zu Öffnungen (45) entlang der Spitze (46) der Hinterkante (40) aufzunehmen; **gekennzeichnet durch**
Turbulatoren (52), die in den Durchgängen (42) entlang hinterer Abschnitte (50) davon angeordnet sind, wobei Abschnitte (54) der Durchgänge (42), die vor den hinteren Abschnitten (50) liegen und die Mehrheit der Längen der Durchgänge (42) bilden, ohne Turbulatoren sind (52), wobei jeder Turbulator (52) eine anstoßende Oberfläche in dem hinteren Durchgangsabschnitt (50) zum Erzeugen von Turbulenz in dem **durch** die hinteren Durchgangsabschnitte (50) laufenden thermischem Medium bildet, wodurch die Hinterkante (40) gekühlt und thermische Gradienten und Spannungen da entlang minimiert werden.

2. Vorrichtung gemäß Anspruch 1, bei der die vorderen Durchgangsabschnitte (54) glatte Bohrungen aufweisen.

3. Vorrichtung gemäß Anspruch 1 oder 2, bei der die Durchgänge (42) kreisförmige Querschnitte aufweisen.

4. Vorrichtung gemäß Anspruch 1, 2 oder 3, bei der die Turbulatoren (52) eine Mehrzahl von Rippen umfassen, die radial nach innen in die Durchgänge (42) hineinragen.

5. Vorrichtung gemäß einem vorhergehenden Anspruch, bei der die vorderen Abschnitte (54) der Durchgänge (42) Einlassöffnungen mit verringerter Strömung (56) benachbart von Verbindungsstellen des Hohlraums (44) und der Durchgänge (42) aufweisen, um die Strömung des thermischen Mediums in die Durchgänge (42) zu begrenzen.

6. Vorrichtung gemäß Anspruch 1, bei der die Turbulatoren ausschließlich entlang hinteren Abschnitten (50) der Durchgänge (42) angeordnet sind.

7. Vorrichtung gemäß Anspruch 6, bei der die vorderen Durchgangsabschnitte (54) glatte Bohrungen in ihren ganzen Längen aufweisen.

## Revendications

1. Dispositif de refroidissement pour turbine comprenant :
une aube de turbine (22) ayant un bord de fuite (40) se terminant par un bout arrière (46) et une cavité (44) en avant dudit bord de fuite (40) pour recevoir un milieu thermique ;
ledit bord de fuite (40) comprenant une pluralité de passages discrets (42) espacés les uns des autres sur la longueur du bord de fuite (40), lesdits passages (42) se trouvant en communication à une extrémité avec et débouchant directement dans ladite cavité (44) pour recevoir le milieu thermique provenant de ladite cavité (44) pour l'écoulement à travers celle-ci jusqu'à des ouvertures (45) le long dudit bout (46) dudit bord de fuite (40) ; **caractérisé par**
des turbulateurs (52) disposés dans lesdits passages (42) le long de parties arrière (50) de ceux-ci avec des parties (54) desdits passages (42) en avant desdites parties arrière (50) et formant la majorité, des longueurs desdits passages (42) étant sans turbulateurs (52), chaque turbulateur (52) formant une surface de butée dans ladite partie de passage arrière (50) pour créer une turbulence dans ledit milieu thermique passant dans lesdites parties de passage arrière (50) en refroidissant de ce fait le bord de fuite (40) et en minimisant les gradients et contraintes thermiques le long de celui-ci.

2. Dispositif selon la revendication 1, dans lequel lesdites parties de passage avant (54) ont des trous lisses.

3. Dispositif selon la revendication 1 ou 2, dans lequel lesdits passages (42) sont de section circulaire.

4. Dispositif selon la revendication 1, 2 ou 3, dans lequel lesdits turbulateurs (52) comprennent une pluralité de nervures faisant saillie radialement vers l'intérieur dans lesdits passages (42).

5. Dispositif selon l'une quelconque des revendications précédentes, dans lequel lesdites parties avant (54) desdits passages (42) ont des ouvertures d'entrée à écoulement réduit (56) au voisinage des jonctions de ladite cavité (44) et desdits passages (42) pour limiter l'écoulement de milieu thermique dans lesdits passages (42).

6. Dispositif selon la revendication 1, dans lequel lesdits turbulateurs sont placés uniquement le long des parties arrière (50) desdits passages (42).

7. Dispositif selon la revendication 6, dans lequel lesdites parties de passage avant (54) ont des trous lisses sur toute leur longueur.
